# EUROPEAN PATENT APPLICATION

(11) **EP 4 450 334 A1**
(43) Date of publication of application: **23.10.2024**
(21) Application number: 22907533.8
(22) Date of filing: 16.12.2022
(51) Int. Cl.: B60R 19/18

(54) **BUMPER ABSORBER**

(30) Priority: 17.12.2021 JP 2021205508
(71) Applicant: Kaneka Corporation, Osaka-shi, Osaka 530-8288 (JP)
(72) Inventor: TAMURA, Mitsuhiro, Tokyo 107-6028 (JP); SAWAI, Seiji, Tokyo 107-6028 (JP)
(74) Representative: Hoffmann Eitle
(86) International application number: PCT/JP2022/046389
(87) International publication number: WO 2023/113011

(57) **Abstract**

To absorb energy so that a reaction force against a pedestrian does not increase to a level higher than or equal to a certain level at a time of collision, a bumper absorber (20) includes: a first structure (21) whose cross-sectional structure perpendicular to a Y direction has a mountain shape; and a second structure (22) which has a shape such that the second structure is simply compressed in an X direction. The first structure (21) has, in a rear end surface (21b) thereof, a groove (21c) extending in the Y direction. A dimension (A) of the first structure (21) in the X direction is greater than a dimension (A') of the second structure (22) in the X direction. Densities of the first and second structures (21 and 22) and a width (D) and a depth (C) of the groove (22c) of the first structure (21) are set to specific ranges.

## Description

### Technical Field

The present invention relates to a bumper absorber.

### Background Art

A bumper system is conventionally provided at the front and the rear of a vehicle body of a vehicle such as an automobile so that the vehicle body will be protected and an occupant or a collided object will be less damaged at a time of collision. In particular, there has recently been developed a bumper system that is capable of reducing an injury level of a pedestrian involved in an automobile accident by reducing a load acting on a leg of the pedestrian.

Such a bumper system has an impact absorbing structure. In the impact absorbing structure, an impact absorbing member (bumper absorber) is disposed on a front surface of a bumper reinforcement that is provided so as to extend in a vehicle width direction.

Bumper absorbers having various shapes have been proposed. For example, a bumper absorber disclosed in Patent Literature 1 is configured such that two or more horizontally oriented U-shaped parts each of which is constituted by at least two leg parts and a front part are disposed so as to open to the rear and these horizontally oriented U-shaped parts are connected to each other in an up-and-down direction with a connection part therebetween.

### Citation List

### [Patent Literature]

### [Patent Literature 1]

Japanese Patent Application Publication Tokukai No. 2004-168077

### Summary of Invention

### Technical Problem

The bumper absorber that is disclosed in Patent Literature 1 and is made of an expanded product absorbs energy by compression of the expanded product at a time of collision. However, when the expanded product is compressed at a level higher than or equal to a certain level, the bumper absorber may be incapable of absorbing the energy, and, consequently, may strongly repulse a pedestrian. Thus, from the viewpoint of pedestrian protection, the bumper absorber has room for improvement in terms of how to absorb energy so that a reaction force does not increase to a level higher than or equal to a certain level.

An object of an aspect of the present invention is to realize a bumper absorber capable of reducing a reaction force against a pedestrian at a time of collision.

### Solution to Problem

In order to attain the above object, a bumper absorber in accordance with an aspect of the present invention is a bumper absorber which is provided to a bumper system in a vehicle body, including: a first structure whose cross-sectional structure perpendicular to a vehicle width direction of the vehicle body has a mountain shape; and a second structure which has a shape such that the second structure is simply compressed in a front-to-rear direction of the vehicle body, wherein the first structure is disposed such that a top of the mountain shape faces a front side of the vehicle body, the first structure has, in a rear end surface thereof, a first groove extending in the vehicle width direction, a dimension of the first structure in the front-to-rear direction is greater than a dimension of the second structure in the front-to-rear direction, a density of the first structure is higher than a density of the second structure and the density of the second structure is not less than 15 Kg/m³, in an up-and-down direction of the vehicle body, a width of the first groove on the rear end surface of the first structure is 10% to 80% of a dimension of the rear end surface, and in the front-to-rear direction of the vehicle body, a depth of the first groove is 20% to 90% of the dimension of the first structure in the front-to-rear direction.

### Advantageous Effects of Invention

According to an aspect of the present invention, it is possible to reduce a reaction force against a pedestrian at a time of collision.

### Brief Description of Drawings

Fig. 1 is a perspective view schematically illustrating a configuration of a vehicle including a bumper system having a bumper absorber in accordance with an embodiment of the present invention.
Fig. 2 is a cross-sectional view schematically illustrating a configuration of the bumper absorber in accordance with an embodiment of the present invention.
Fig. 3 is an F-S diagram illustrating impact absorbing action of the bumper absorber in accordance with an embodiment of the present invention and corresponding to deformations of the bumper absorber.
Fig. 4 illustrates states of the deformations of the bumper absorber which correspond to the F-S diagram illustrated in

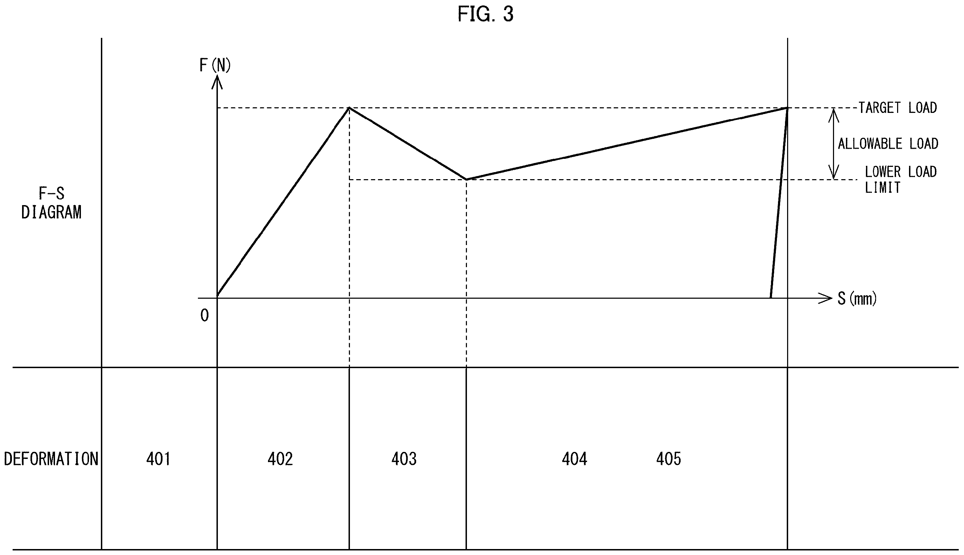

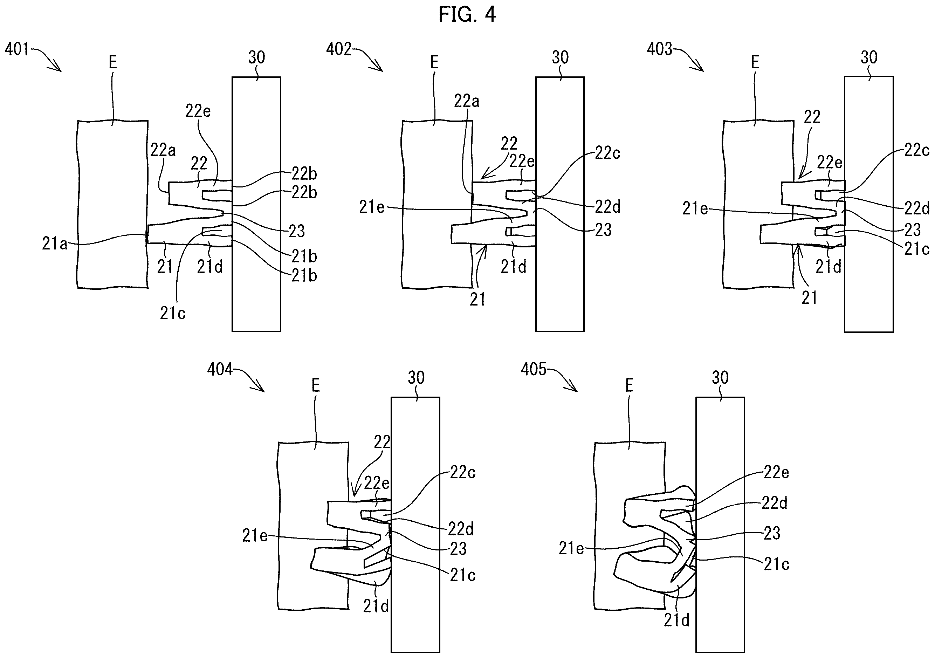

Fig. 3. 401 to 405 shown in a row of the deformations that is shown in Fig. 3 respectively correspond to the states of the deformations illustrated in 401 to 405 of Fig. 4.

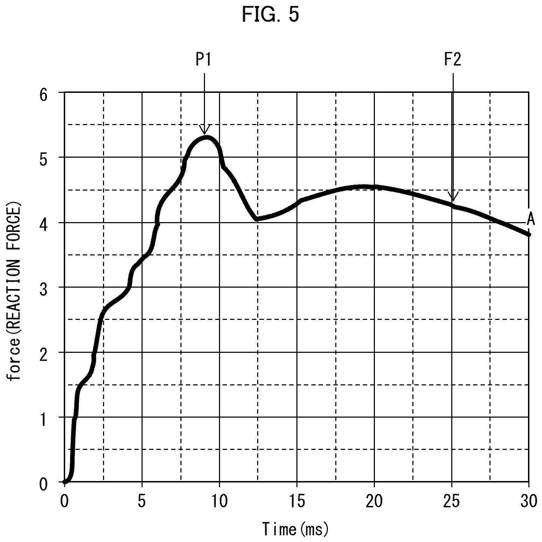

Fig. 5 is an example of a graph obtained by simulating a reaction force and a time (millisecond) when a collision object collides with the bumper absorber.

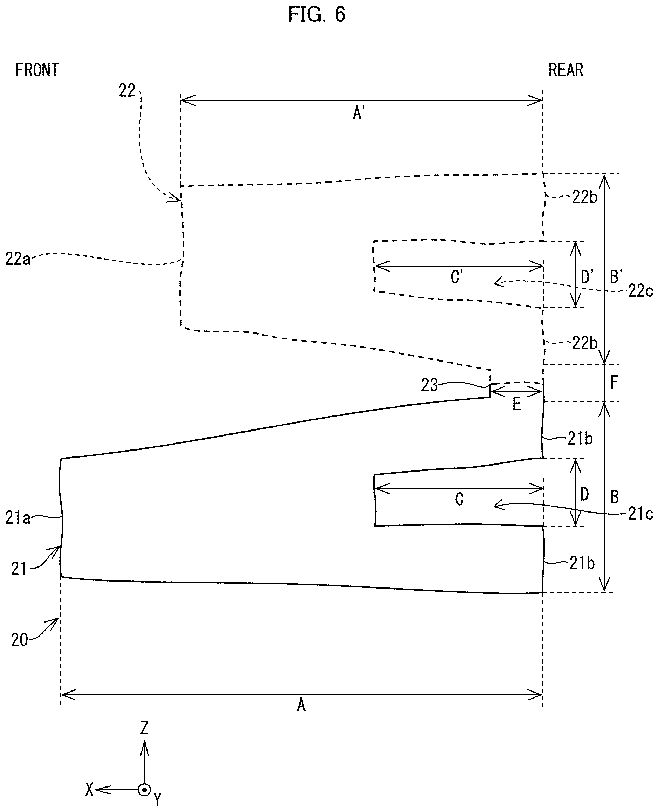

Fig. 6 is a cross-sectional view illustrating a preferable example of each dimension that defines the bumper absorber in accordance with an embodiment of the present invention.

### Description of Embodiments

The following description will discuss an embodiment of the present invention. The present invention is not, however, limited to the embodiment. The present invention is not limited to the configurations described below, but may be altered in various ways within the scope of the claims by a person skilled in the art. The present invention also encompasses, in its technical scope, any embodiment or example derived by combining technical means disclosed in differing embodiments or examples. Further, a new technical feature can be formed by combining the technical means disclosed in differing embodiments. All of the academic documents and patent literatures listed herein are incorporated by reference herein. Any numerical range expressed as "A to B" herein means "not less than A (inclusive of A and greater than A) and not more than B (inclusive of B and smaller than B)", unless otherwise stated. Further, the drawings are shown so as to be easily understood when referred to together with the following descriptions. The drawings are not necessarily illustrated to have a constant scale ratio.

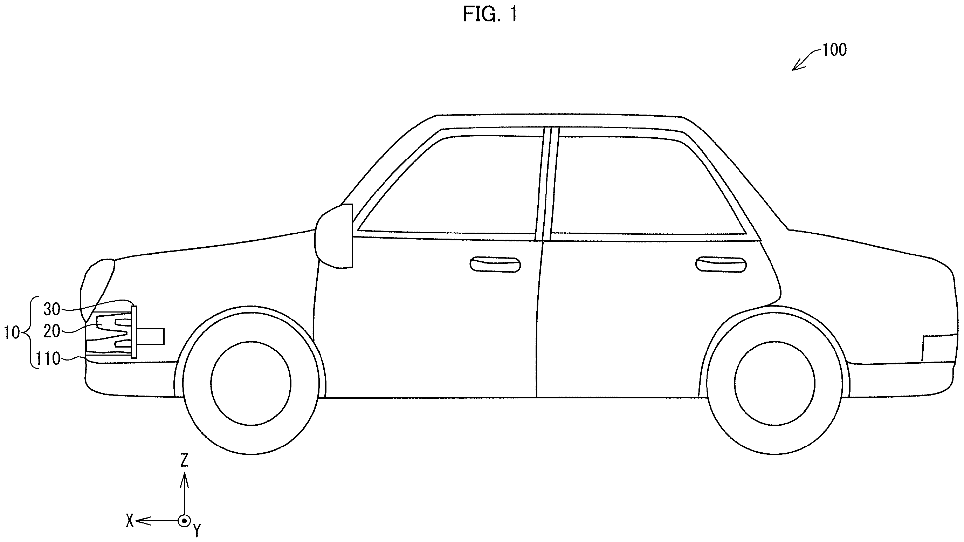

The following description will discuss an embodiment of the present invention in detail. Fig. 1 is a perspective view schematically illustrating a configuration of a vehicle 100 including a bumper system 10 having a bumper absorber 20 in accordance with the present embodiment. It is herein assumed that a direction from the rear to the front of the vehicle 100 is an X direction (front-to-rear direction), a vehicle width direction of the vehicle 100 is a Y direction, and a direction perpendicular to both the X direction and the Y direction is a Z direction (up-and-down direction). The Z direction can also be described as a direction from a lower side to an upper side of the vehicle 100.

As illustrated in Fig. 1, the bumper system 10 includes the bumper absorber 20, a bumper reinforcement 30, and a bumper fascia 110. The bumper reinforcement 30 is mounted to a vehicle body of the vehicle 100. The bumper absorber 20 is provided so as to be in contact with a front surface of the bumper reinforcement 30. The bumper fascia 110 is an exterior member of the vehicle 100 and covers the bumper absorber 20 and the bumper reinforcement 30.

The bumper absorber 20 has a function of absorbing collision energy by being deformed or crushed between a collided object (e.g., a leg of a pedestrian) and the bumper reinforcement 30 in the event of a collision accident. In particular, the bumper absorber 20 has a function of reducing a reaction force against the collided object. The bumper absorber 20 is made of a highly impact absorbent material.

The bumper reinforcement 30 is made of steel and is a member horizontally extending in the Y direction. The bumper reinforcement 30 receives the bumper absorber 20, which is compressively deformed. For example, the bumper reinforcement 30 has a hollow tubular structure having a substantially rectangular parallelepiped external shape. In such a hollow tubular structure, a partition wall for reinforcement may be provided in a hollow tube. Furthermore, the bumper reinforcement 30 functions as (i) a mounting seat for the bumper absorber 20 and (ii) a base that works when the bumper absorber 20 is crushed and absorbs an impact.

The bumper fascia 110 is a member with which the bumper absorber 20 and the bumper reinforcement 30 are covered from the outside of the vehicle body. The bumper fascia 110 allows the vehicle body of the vehicle 100 to have a better design quality. Furthermore, the bumper fascia 110 has a function of protecting the bumper absorber 20 from an external environment so as to prevent a deterioration in performance of the bumper absorber 20.

The bumper fascia 110 is preferably deformed or broken by a relatively small load in a case where the bumper fascia 110 receives an impact load. This allows the impact load to be easily transmitted to the bumper absorber 20, so that the bumper fascia 110 can be prevented from inhibiting impact absorbing performance of the bumper absorber 20. Thus, the bumper fascia 110 is, preferably, for example, a thin-walled molded product that is formed by injection molding or press molding of a synthetic resin or the like.

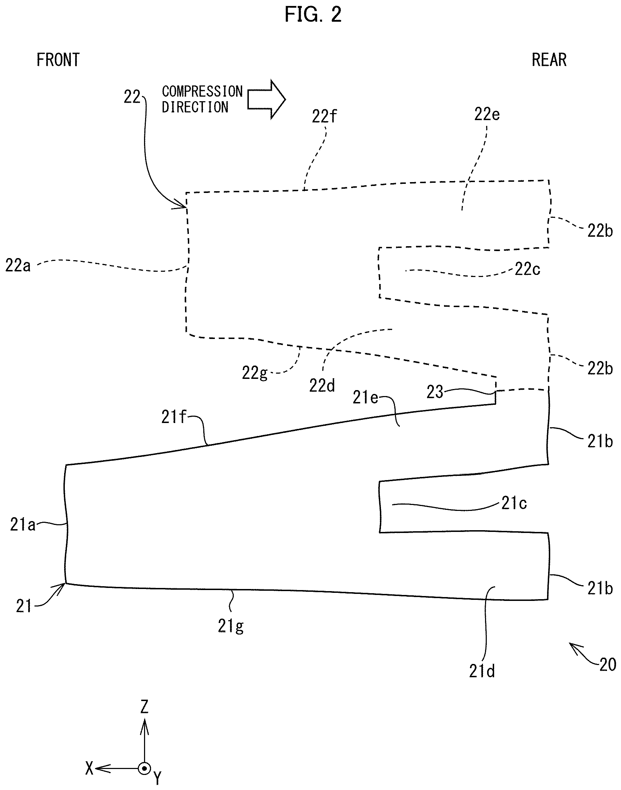

Next, a configuration of the bumper absorber 20 will be described in more detail. Fig. 2 is a cross-sectional view schematically illustrating the configuration of the bumper absorber 20.

The bumper absorber 20 extends in the Y direction (vehicle width direction), and has a length that is close to the width of the vehicle 100. A cross-sectional shape of the bumper absorber 20 which cross-sectional shape is along the X direction (that is, cross-sectional shape of the bumper absorber 20 which cross-sectional shape is perpendicular to the Y direction) is substantially uniform in the Y direction. As illustrated in Fig. 2, the bumper absorber 20 includes a first structure 21, a second structure 22, and a connection part 23. A dimension of the first structure 21 in the X direction is greater than a dimension of the second structure 22 in the X direction. The first structure 21 is provided on a lower side of the second structure 22.

A cross-sectional structure of the first structure 21 which cross-sectional structure is perpendicular to the Y direction of the vehicle body has a mountain shape. The first structure 21 is disposed such that a top of the mountain shape faces the front side of the vehicle body. More specifically, the first structure 21 has a front end surface 21a, a rear end surface 21b, a groove 21c (first groove), an upper surface 21f, and a lower surface 21g. The front end surface 21a constitutes the top of the mountain shape. The front end surface 21a functions as a collision surface that receives a collision from a collision object in the event of a collision accident. The front surface 21a is located at the foremost side of the bumper absorber 20 as a whole. The rear end surface 21b is in contact with the above-described bumper reinforcement 30. The upper surface 21f and the lower surface 21g are connected to the front end surface 21a. By the upper surface 21f and the lower surface 21g, a dimension of the first structure 21 in the Z direction becomes smaller from a rear side toward the front side. The groove 21c is formed such that the groove 21c is depressed toward the front side with respect to the rear end surface 21b, and extends in the Y direction. By the groove 21c being formed in the rear end surface 21b, a cross-sectional shape of the first structure 21 which cross-sectional shape is perpendicular to the Y direction is a horizontally oriented U shape such that the first structure 21 has two leg parts 21d and 21e.

A cross-sectional structure of the second structure 22 which cross-sectional structure is perpendicular to the Y direction of the vehicle body has a mountain shape. The second structure 22 has a front end surface 22a, a rear end surface 22b, a groove 22c (second groove), an upper surface 22f, and a lower surface 22g. The front end surface 22a functions as a collision surface that receives the collision from the collision object. The rear end surface 22b is in contact with the above-described bumper reinforcement 30. The rear end surface 21b and the rear end surface 22b are disposed at the substantially same position in the X direction. The upper surface 22f and the lower surface 22g are connected to the front end surface 22a. By the upper surface 22f and the lower surface 22g, a dimension of the second structure 22 in the Z direction becomes smaller from the rear side toward the front side. The groove 22c is formed such that the groove 22c is depressed toward the front side with respect to the rear end surface 22b, and extends in the Y direction. By the groove 22c being formed in the rear end surface 22b, a cross-sectional shape of the second structure 22 which cross-sectional shape is perpendicular to the Y direction is a horizontally oriented U shape such that the second structure 22 has two leg parts 22d and 22e.

The second structure 22 has a shape such that the second structure 22 is simply compressed in the front-to-rear direction (that is, X direction) when the front end surface 22a receives the collision by the collision object. The expression "simply compressed" means that the second structure 22 is compressed in the X direction in response to the collision with the collision object without any change in orientation of the front end surface 22a and of the rear end surface 22b. In a case where the cross-sectional shape of the second structure 22 is a horizontally oriented U shape, the expression "simply compressed" means that the second structure 22 is compressed in the X direction without any change in orientation of the front end surface 22a and of the rear end surface 22b of at least one of the leg parts 22d and 22e.

When the second structure 22 receives the collision by the collision object, the second structure 22 is simply compressed without being inverted or overturned. In this case, the second structure 22 is compressed such that the front end surface 22a approaches the rear end surface 22b, on which the bumper reinforcement 30 and the second structure 22 are in contact with each other. Note, here, that a direction in which the front end surface 21a approaches the rear end surface 22b is defined as a compression direction. The compression direction can also be described as a direction from the front side toward the rear side, that is, a -X direction.

Note that the cross-sectional shape of the second structure 22 which cross-sectional shape is perpendicular to the Y direction is not limited to the horizontally oriented U shape as illustrated in Fig. 2, and only needs to be a shape such that the second structure 22 is simply compressed. The groove 22c does not need to be formed in the rear end surface 22b, provided that the second structure 22 is simply compressed.

The connection part 23 connects the first structure 21 and the second structure 22 in the Z direction. The connection part 23 is provided between the first structure 21 and the second structure 22 and to rear end parts thereof. Note that the connection part 23 is not particularly limited, provided that the connection part 23 connects the first structure 21 and the second structure 22. For example, the connection part 23 may be constituted by a solid of an adhesive that bonds the first structure 21 and the second structure 22 to each other. The connection part 23 may be integrally formed together with the first structure 21 and the second structure 22.

The bumper absorber 20 only needs to be configured to exhibit impact absorbing action (described later), and the connection part 23 may not be formed. That is, the bumper absorber 20 may be configured such that the first structure 21 and the second structure 22 are separated, provided that the bumper absorber 20 exhibits impact absorbing action (described later).

Next, the impact absorbing action of the bumper absorber 20 will be described in more detail. Fig. 3 is an F-S diagram illustrating the impact absorbing action of the bumper absorber 20 in accordance with the present embodiment and corresponding to deformations of the bumper absorber 20. Fig. 4 illustrates states of the deformations of the bumper absorber 20 which correspond to the F-S diagram illustrated in Fig. 3. 401 to 405 shown in a row of the deformations shown in Fig. 3 respectively correspond to the states of the deformations illustrated in 401 to 405 of Fig. 4. The F-S diagram of Fig. 3 is a graph showing a relationship between a load F received by the collision object and a displacement S, the relationship being observed under the impact absorbing action of the bumper absorber 20. Note that the expression "load received by the collision object" indicates a value obtained by multiplying, by the mass of the collision object, acceleration (deceleration) acting on the collision object at a time of the collision or the like with the vehicle, and may be simply referred to as a load. The load can also be described as the reaction force.

As illustrated in Figs. 3 and 4, when the bumper absorber 20 receives an impact of the collision object E from the front, the bumper absorber 20 changes in shape as illustrated in 401 to 405 of Fig. 4 so that the impact (impact load) can be softened. As illustrated in 401of Fig. 4, when the impact is applied to the bumper absorber 20 by the collision object E, the collision object E first comes into contact with the front end surface 21a of the first structure 21. When the impact is further applied to the bumper absorber 20, the first structure 21 is compressed, and the collision object E comes into contact with the front end surface 22a of the second structure 22. The bumper absorber 20 is such that the first structure 21 is compressed and the second structure 22 is not compressed, in up to the state of the change in shape illustrated in 402 of Fig. 4. Thus, since merely the first structure 21 receives the collision object E and is compressed, the load in an initial stage of the collision increases, as shown by the F-S diagram illustrated in Fig. 3.

When the impact is further applied to the bumper absorber 20, the leg parts 21d and 21e of the first structure 21 are both bent downward and deformed, as illustrated in 403 of Fig. 4. When the impact is further applied, the leg parts 21d and 21e of the first structure 21 are both further bent and deformed, so that the leg parts 21d and 21e are both bent and deformed in a direction different from the front-to-rear direction (X direction), as illustrated in 404 and 405 of Fig. 4. In contrast, in the deformed state illustrated in 403 of Fig. 4, the second structure 22 maintains a state of being in contact with the collision object E. When the impact is further applied, the second structure 22 is simply compressed, as illustrated in 404 and 405 of Fig. 4. Specifically, the second structure 22 is simply compressed without any change in orientation of the front end surface 22a and of the rear end surface 22b of the leg part 22e.

Note, here, that, up to the state illustrated in 403 of Fig. 4, the first structure 21 and the second structure 22 are both compressed upon receipt of the collision object E. Thus, the load received by the collision object E gradually increases, and reaches a load peak (target load) at a time point at which the leg parts 21d and 21e are bent and deformed, as shown by the F-S diagram of Fig. 3. In the state illustrated in 403 of Fig. 4, the leg parts 21d and 21e are both bent, so that the first structure 21 is bent and deformed. This causes the impact of the collision object E to be unlikely to be transmitted to the first structure 21. In this case, the load (reaction force) received by the collision object E decreases to a lower load limit.

Next, as illustrated in 404 and 405 of Fig. 4, the first structure 21 is completely bent (buckled) or broken, and merely the second structure 22 receives the collision object E. When the impact is applied to the first structure 21, the first structure 21 is bent and deformed or is broken. The second structure 22 has a structure in which, after the reaction force has decreased by bending or breaking of the first structure 21, the second structure 22 complements the reaction force by being simply compressed. Thus, the second structure 22 is compressively deformed while absorbing the impact, and is compressed within an allowable load. Since merely the second structure 22 repulses the impact, it is possible to reduce repulsion against the impact to a low level. Therefore, since the load received by the collision object reaches the target load while gradually increasing without decreasing below the lower load limit, the impact is softened.

As described earlier, the bumper absorber 20 in accordance with the present embodiment makes it possible to cause the load received by the collision object E to fall within the allowable load range ranging from the lower load limit to the target load. That is, the bumper absorber 20 brings about an effect of absorbing energy so that a reaction force (load) against a pedestrian does not increase to a level higher than or equal to a certain level at a time of collision.

### (Indexes for evaluating bumper absorber 20)

Next, indexes for evaluating the bumper absorber 20 for bringing about the above-described effect are described with reference to Fig. 5. Fig. 5 is an example of a graph obtained by simulating a reaction force and a time (millisecond) when the collision object collides with the bumper absorber 20. In the graph of Fig. 5, the reaction force increases after the bumper absorber 20 and the collision object collide with each other, and then the repulsive force decreases after the repulsive force reaches the first repulsion peak P1. Then, in 25 milliseconds, the bumper absorber 20 and the collision object are separated by a repulsive force F2.

### <Repulsion peak P1>

It is considered ideal that, in the absorbing action of the bumper absorber 20, a total energy absorption amount, which is an integral value of the graph of Fig. 5, is large while the reaction force against the collision object (for example, human) is low. Thus, it is ideal that, after the bumper absorber 20 and the collision object collide with each other, the repulsive force rapidly reaches the repulsion peak P1 and then gradually decreases. In this viewpoint, it is preferable that, after the bumper absorber 20 collides with the collision object, the repulsive force reaches the repulsion peak P1 within 10 milliseconds.

### <Repulsion peak P1/repulsive force F2 at a time of separation>

In the viewpoint that the repulsive force gradually decreases after the repulsive force reaches the repulsion peak P1, it is ideal that the repulsion peak P1/the repulsive force F2 at a time of separation be close to 1. Preferably, the bumper absorber 20 satisfies 60% ≤ the repulsion peak P1/the repulsive force F2 at a time of separation×100 ≤ 120%.

### <Maximum stroke (maximum compression amount) of the bumper absorber 20>

In the view of the above ideal, to what extent the bumper absorber 20 is compressively deformed after the bumper absorber 20 collides with the collision object is important. The maximum stroke (compressive deformation amount) of the bumper absorber 20 after the bumper absorber 20 collides with the collision object is not particularly limited, provided that the above absorbing action can be realized. The maximum stroke (compressive deformation amount) is preferably 50% to 90%, more preferably 50% to 80%, and even more preferably 60% to 80% of the length of the first structure 21 in the X direction.

### <Energy absorption efficiency>

Furthermore, in the viewpoint of reducing the weight of the bumper absorber 20, energy absorption efficiency, which indicates how much energy is absorbed per unit weight, is important. This energy absorption efficiency can be expressed as a value obtained by dividing, by the weight of the bumper absorber 20, a total energy absorption amount of the bumper absorber 20 against an impact of the collision object, that is, (the total energy absorption amount of the bumper absorber 20)/(the weight of the bumper absorber 20). Note that the total energy absorption amount of the bumper absorber 20 can be calculated as an integral value of the graph of Fig. 5.

In the viewpoint of reducing the weight of the bumper absorber 20, the energy absorption efficiency is preferably not less than 1.5 and more preferably not less than 2.0.

Thus, indexes for evaluating the bumper absorber 20 for bringing about the above-described effect are as follows.

(i) The bumper absorber 20 reaches the repulsion peak P1 within 10 milliseconds after the bumper absorber 20 collides with the collision object.
(ii) The bumper absorber 20 satisfies 60% ≤ the repulsion peak P1/the repulsive force F2 at a time of separation×100 ≤ 120%.
(iii) The energy absorption efficiency of the bumper absorber 20 is not less than 1.5.

### (Various dimensions of bumper absorber 20)

Next, definition by various dimensions of the bumper absorber 20 and definition by a material of the bumper absorber 20 for satisfying the above (i) to (iii) are described. Fig. 6 is a cross-sectional view illustrating a preferable example of each dimension that defines the bumper absorber bumper absorber 20. Note that, by way of precaution, the bumper absorber in accordance with an embodiment of the present invention is not limited to the dimensions and the like.

First, a dimension A of the first structure 21 in the X direction is greater than a dimension A' of the second structure 22 in the X direction. The difference between the dimension A and the dimension A' is not particularly limited, but is preferably 5 mm to 80 mm and more preferably 10 mm to 50 mm.

The dimension A of the first structure 21 in the X direction is not particularly limited, but is preferably not more than 150 mm and more preferably not more than 100 mm. The lower limit of the dimension A is not particularly limited, provided that the dimension A is greater than the dimension A'. However, the lower limit of the dimension A is preferably not less than 30 mm and more preferably not less than 50 mm.

In the Z direction, a width D of the groove 21c on the rear end surface 21b of the first structure 21 is 10% to 80%, preferably 20% to 60%, and more preferably 20% to 40% of a dimension B of the rear end surface 21b.

In the X direction, a depth C of the groove 21c is 20% to 90% and preferably 30% to 80% of the dimension A of the first structure 21 in the X direction.

In the Z direction, a total B+B'+F of the dimension B of the rear end surface 21b of the first structure 21, a dimension B' of the rear end surface 22b of the second structure 22, and a dimension F of the connection part 23 in the Z direction is not particularly limited, provided that the above (i) to (iii) are satisfied. The total B+B'+F is preferably not more than 300 mm and more preferably not more than 200 mm. The lower limit of the total B+B'+F is preferably not less than 50 mm.

The dimension F of the connection part 23 in the Z direction is not particularly limited, provided that the above (i) to (iii) are satisfied. The dimension F is preferably 0 mm to 30 mm. Note that the dimension F may be 0 mm, that is, the connection part 23 may not exist and the first structure 21 and the second structure 22 may be separated.

In the X direction, a dimension E of the connection part 23 is not particularly limited, provided that the above (i) to (iii) are satisfied. The dimension E is preferably not more than 30% and more preferably not more than 10% of the dimension A of the first structure 21. Note that the dimension E may be 0 mm such that the connection part 23 does not exist and the first structure 21 and the second structure 22 are separated.

In the X direction, a depth C' of the groove 22c of the second structure 22 is not particularly limited, provided that the above (i) to (iii) are satisfied. The depth C' is preferably not more than 80% and more preferably not more than 50% of the dimension A' of the second structure 22 in the X direction. The lower limit is not particularly limited, and may be 0% of the dimension A', that is, the depth C' may be 0 mm.

### (Material, weight, and density of bumper absorber 20)

The material of the bumper absorber 20 is not particularly limited. Preferably, the bumper absorber 20 is a molded product of an expanded thermoplastic resin.

A base material resin of the expanded thermoplastic resin is not particularly limited, but is preferably an expandable thermoplastic resin. The thermoplastic resin is preferably at least one resin selected from the group consisting of polystyrene-based resins, polyolefin-based resins, and polyester-based resins.

Examples of the polystyrene-based resins include resins that each have a structural unit derived from a styrene-based monomer. Suitable examples of the styrene-based monomer include styrene, methylstyrene, ethylstyrene, isopropylstyrene, dimethylstyrene, bromostyrene, chlorostyrene, vinyltoluene, and vinyl xylene.

Examples of the polyester-based resins include aliphatic polyester resins, aromatic polyester resins, and aliphatic-aromatic polyester resins.

The polyolefin-based resins are not particularly limited, and examples thereof include polypropylene-based resins and polyethylene-based resins.

Specific examples of the polyolefin-based resins include: polyethylene-based resins each containing ethylene as a main component, such as high-density polyethylene, intermediate-density polyethylene, low-density polyethylene, and linear low-density polyethylene; and polypropylene-based resins each containing propylene as a main component. Each of these polyolefin-based resins can be used alone, or two or more of these polyolefin-based resins can be used in combination.

Among these polyolefin-based resins, the polyethylene-based resins each containing ethylene as a main component is particularly effective in a production method in accordance with the present embodiment. In particular, a polypropylene-based resin containing ethylene, which is an α-olefin, as a copolymerizable monomer component is easily available and is easily processable or moldable.

The polypropylene-based resins are not particularly limited, provided that the polypropylene-based resins each contain propylene as a main component of a monomer. Examples of the polypropylene-based resins include a propylene homopolymer, an α-olefin-propylene random copolymer, and an α-olefin-propylene block copolymer. Each of these polypropylene-based resins can be used alone, or two or more of these polypropylene-based resins can be used in combination.

The weight of the bumper absorber 20 is not particularly limited, provided that the above (i) to (iii) are satisfied. The weight of the bumper absorber 20 can be set, as appropriate, according to the size of the vehicle body. The weight of the bumper absorber 20 from the central part of which a piece having a width of 200 mm is cut out is preferably 50 g to 300 g and more preferably 70 g to 150 g.

In the bumper absorber 20 in accordance with the present embodiment, (a) the density of the first structure 21 is higher than the density of the second structure 22 and (b) the density of the second structure 22 is not less than 15 kg/m³ and preferably not less than 30 kg/m³. The upper limit of the density of the second structure 22 is preferably not more than 200 kg/m³ and is more preferably not more than 150 kg/m³. Thus, the bumper absorber 20 is a composite molded product in which the first structure 21 and the second structure 22 have respective different densities. This allows an increase in degree of freedom in design of the bumper absorber 20.

An in-mold expanded product in which the first structure 21 and the second structure 22 have respective different densities (differ from each other in expansion rate) as described above can be produced, for example, by a technique disclosed in Japanese Patent No. 4233269. More specifically, an in-mold expansion molding device disclosed in Japanese Patent No. 4233269 includes a partition member for compartmentalizing a molding space into a plurality of compartment-forming spaces, and a fixed partition plate and fixed comb teeth are used for this partition member.

The density of raw material beads used for the first structure 21 and the second structure 22 depends on a material of the raw material beads, but preferably falls within a range of 15 kg/m³ to 333 kg/m³. Specifically, in a case where the raw material beads are made of a polystyrene-based resin, the raw material beads having a density of 20 kg/m³ to 333 kg/m³ and preferably 30 kg/m³ to 200 kg/m³ can be suitably used. In a case where the raw material beads are made of a polyolefin-based resin, the raw material beads having a density of 15 kg/m³ to 300 kg/m³ can be suitably used. Further, the raw material beads having a particle size falling within a range of 0.5 mm to 10 mm and preferably 2.0 mm to 8.0 mm can be suitably used.

The density ratio of the first structure 21 to the second structure 22 (the density of the first structure 21/the density of the second structure 22) is not particularly limited, provided that the above (i) to (iii) are satisfied. However, the density ratio is preferably 1.5 times to 10 times. The first structure 21 having a density falling within a range of preferably 20 kg/m³ to 333 kg/m³, more preferably 20 kg/m³ to 200 kg/m³, and 30 kg/m³ to 180 kg/m³ can be suitably used. The density of the second structure 22 is preferably 15 kg/m³ to 200 kg/m³ and more preferably 30 kg/m³ to 150 kg/m³.

### (Summary)

A bumper absorber 20 in accordance with a first aspect of the present invention is a bumper absorber 20 which is provided to a bumper system 10 in a vehicle body, including: a first structure 21 whose cross-sectional structure perpendicular to a vehicle width direction (Y direction) of the vehicle body has a mountain shape; and a second structure 22 which has a shape such that the second structure is simply compressed in a front-to-rear direction (X direction) of the vehicle body, wherein the first structure 21 is disposed such that a top of the mountain shape faces a front side of the vehicle body, the first structure 21 has, in a rear end surface 21b thereof, a first groove (groove 21c) extending in the vehicle width direction, a dimension A of the first structure 21 in the front-to-rear direction is greater than a dimension A' of the second structure 22 in the front-to-rear direction, a density of the first structure 21 is higher than a density of the second structure 22 and the density of the second structure 22 is not less than 15 kg/m³, in an up-and-down direction (Z direction) of the vehicle body, a width D of the first groove on the rear end surface 21b of the first structure 21 is 10% to 80% of a dimension B of the rear end surface 21b, and in the front-to-rear direction of the vehicle body, a depth C of the first groove is 20% to 90% of the dimension A of the first structure 21 in the front-to-rear direction.

The bumper absorber 20 in accordance with a second aspect of the present invention is configured such that, in the first aspect, in a case where a value obtained by dividing, by a weight of the bumper absorber 20, a total energy absorption amount of the bumper absorber 20 against an impact of a collision object E is defined as an energy absorption efficiency, the energy absorption efficiency is not less than 1.5.

The bumper absorber 20 in accordance with a third aspect of the present invention is configured such that, in the first or second aspect, the bumper absorber 20 is a molded product of an expanded thermoplastic resin.

The bumper absorber 20 in accordance with a fourth aspect of the present invention is configured such that, in any one of the first through third aspects, a density ratio of the first structure 21 to the second structure 22 is 1.5 times to 10 times.

The bumper absorber 20 in accordance with a fifth aspect of the present invention is configured such that, in any one of the first through fourth aspects, the dimension A of the first structure 21 in the front-to-rear direction is not more than 150 mm.

The bumper absorber 20 in accordance with a sixth aspect of the present invention is configured such that, in any one of the first through fifth aspects, a rear end part of the first structure 21 and a rear end part of the second structure 22 are connected to each other in the up-and-down direction (Z direction) with a connection part 23 therebetween, and in the up-and-down direction of the vehicle body, a total of the dimension B of the rear end surface 21b of the first structure 21, a dimension B' of a rear end surface 22b of the second structure 22, and a dimension F of the connection part 23 is not more than 300 mm.

The bumper absorber 20 in accordance with a seventh aspect of the present invention is configured such that, in any one of the first through sixth aspects, a maximum stroke of the bumper absorber 20 against collision with a collision object E is 50% to 80% of the dimension A of the first structure 21 in the front-to-rear direction.

The bumper absorber 20 in accordance with an eighth aspect of the present invention is configured such that, in any one of the first through seventh aspects, a rear end part of the first structure 21 and a rear end part of the second structure 22 are connected to each other in the up-and-down direction (Z direction) with a connection part 23 therebetween, and in the front-to-rear direction of the vehicle body, a dimension E of the connection part 23 is not more than 30% of the dimension A of the first structure.

The bumper absorber 20 in accordance with a ninth aspect of the present invention is configured such that, in any one of the first through eighth aspects, the second structure 22 has, in a rear end surface 22b thereof, a second groove (groove 22c) extending in the vehicle width direction, and in the front-to-rear direction of the vehicle body, a depth C' of the second groove is not more than 80% of the dimension A' of the second structure 22 in the front-to-rear direction.

The bumper absorber 20 in accordance with a tenth aspect of the present invention is configured such that, in any one of the first through ninth aspects, the bumper absorber 20 reaches a repulsion peak P1 within 10 milliseconds after the bumper absorber 20 collides with a collision object E.

The bumper absorber 20 in accordance with an eleventh aspect of the present invention is configured such that, in any one of the first through tenth aspects, the bumper absorber 20 satisfies 60% ≤ repulsion peak P1/repulsive force F2 at a time of separation×100 ≤ 120%.

The bumper absorber 20 in accordance with a twelfth aspect of the present invention is configured such that, in any one of the first through eleventh aspects, the density of the first structure 21 is 20 kg/m³ to 333 kg/m³.

The bumper absorber 20 in accordance with a thirteenth aspect of the present invention is configured such that, in any one of the first through twelfth aspects, the second structure 22 is compressed in the front-to-rear direction (X direction) of the vehicle body in response to collision with a collision object E without any change in orientation of a front end surface 22a thereof and of a rear end surface 22b thereof.

The bumper absorber 20 in accordance with a fourteenth aspect of the present invention is configured such that, in any one of the first through thirteenth aspects, a cross-sectional shape of the first structure 21 which cross-sectional shape is perpendicular to the vehicle width direction (Y direction) of the vehicle body is a horizontally oriented U shape such that the first structure has two leg parts 21d and 21e.

The bumper absorber 20 in accordance with a fifteenth aspect of the present invention is configured such that, in any one of the first through fourteenth aspects, a cross-sectional shape of the second structure 22 which cross-sectional shape is perpendicular to the vehicle width direction (Y direction) of the vehicle body is a horizontally oriented U shape such that the second structure has two leg parts 22d and 22e.

The bumper absorber 20 in accordance with a sixteenth aspect of the present invention is configured such that, in any one of the first through fifteenth aspects, the first structure 21 is provided on a lower side of the second structure 22.

The bumper absorber 20 in accordance with a seventeenth aspect of the present invention is configured such that, in any one of the first through sixteenth aspects, when an impact is applied to the first structure 21, the first structure 21 is bent and deformed or broken.

The bumper absorber 20 in accordance with an eighteenth aspect of the present invention is configured such that, in any one of the first through seventeenth aspects, the bumper absorber 20 is a molded product of an expanded thermoplastic resin, and a base material resin of the expanded thermoplastic resin is a polypropylene-based resin.

### Examples

The present invention is described in detail with reference to examples. However, the present invention is not limited by the examples.

### (Evaluation method)

A state when a collision object collided with a bumper absorber was simulated. The bumper absorber of each of the examples and comparative examples was then evaluated on the basis of the indexes for evaluation, which are described in the above (Indexes for evaluating bumper absorber 20). Conditions for the simulation were as follows: a dimension in a Y direction was a width of 200 mm in the simulation; and a leg part equivalent weight of a pedestrian protection model was collided with the bumper absorber.

### <Repulsion peak: Evaluation item 1>

From a graph obtained by simulating a reaction force and a time (millisecond) when a collision object collided with the bumper absorber, the time taken for the reaction force of the bumper absorber to reach a repulsion peak after the bumper absorber and the collision object collided with each other was measured, and evaluated on the basis of the following evaluation criteria.

### (Evaluation criteria)

Good: The time taken for the reaction force to reach a repulsion peak P1 was not longer than 10 ms.

Poor: The time taken for the reaction force to reach the repulsion peak P1 was longer than 10 ms.

### <Repulsion peak/repulsive force at a time of separation: Evaluation item 2>

From the graph obtained by simulating the reaction force and the time (millisecond) when the collision object collided with the bumper absorber, a repulsive force F2 at a time of separation was measured, and the repulsion peak/the repulsive force at a time of separation×100 was calculated. A value thus calculated was evaluated on the basis of the following evaluation criteria.

Good: 60% ≤ the repulsion peak/the repulsive force at a time of separation×100 ≤ 120% was satisfied.

Poor: 60% ≤ the repulsion peak P1/the repulsive force F2 at a time of separation×100 ≤ 120% was not satisfied.

### <Maximum stroke (maximum compression amount) of bumper absorber: Evaluation item 3>

From the graph obtained by simulating the reaction force and the time (millisecond) when the collision object collided with the bumper absorber, the maximum stroke of the bumper absorber after the bumper absorber collided with the collision object was measured. Then, the maximum stroke was compared with the length of a first structure in an X direction, and evaluated on the basis of the following evaluation criteria.

Good: The maximum stroke of the bumper absorber was 50% to 80% of the length of the first structure in the X direction.

Poor: The maximum stroke of the bumper absorber was outside a range of 50% to 80% of the length of the first structure in the X direction.

### <Energy absorption efficiency: Evaluation item 4>

From the graph obtained by simulating the reaction force and the time (millisecond) when the collision object collided with the bumper absorber, a total energy absorption amount of the bumper absorber was measured as an integral value of the graph. Then, a value obtained by dividing, by the weight of the bumper absorber, the total energy absorption amount of the bumper absorber, that is, (the total energy absorption amount of the bumper absorber)/(the weight of the bumper absorber) was calculated and regarded as energy absorption efficiency. The calculated energy absorption efficiency was evaluated on the basis of the following evaluation criteria.

Good: The energy absorption efficiency was not less than 1.5.

Poor: The energy absorption efficiency was less than 1.5.

### (Examples 1 through 8 and Comparative Examples 1 to 8)

Bumper absorbers of Examples 1 to 8 and Comparative Examples 1 to 8 which bumper absorbers had dimensions, densities, and shapes shown in Table 1 were set. States when the collision object collided with the bumper absorbers of Examples 1 through 8 and Comparative Examples 1 to 8 were simulated. The bumper absorbers of Examples 1 to 8 and Comparative Examples 1 to 8 were evaluated for the above-described evaluation items 1 to 4. Evaluation results are shown in Table 1.

**[Table 1]**

| | | Example | | | | | | | |
|---|---|---|---|---|---|---|---|---|---|
| | | 1 | 2 | 3 | 4 | 5 | 6 | 7 | 8 |
| First structure | Density (kg/m³) | 180 | 140 | 180 | 180 | 180 | 180 | 180 | 180 |
| | Dimension A (mm) | 90 | 90 | 90 | 90 | 90 | 90 | 90 | 90 |
| | Dimension B (mm) | 39 | 39 | 39 | 39 | 39 | 39 | 39 | 39 |
| | Groove | Formed | Formed | Formed | Formed | Formed | Formed | Formed | Formed |
| | Depth C of groove (mm) | 31.5 | 31.5 | 31.5 | 31.5 | 31.5 | 31.5 | 31.5 | 31.5 |
| | Width D of groove (mm) | 12.5 | 12.5 | 12.5 | 12.5 | 12.5 | 12.5 | 12.5 | 12.5 |
| | D/B*100 | 32 | 32 | 32 | 32 | 32 | 32 | 32 | 32 |
| Second structure | Density (kg/m³) | 70 | 70 | 30 | 100 | 140 | 70 | 70 | 70 |
| | Dimension A' (mm) | 67.5 | 67.5 | 67.5 | 67.5 | 67.5 | 67.5 | 67.5 | 67.5 |
| | Dimension B' (mm) | 39 | 39 | 39 | 39 | 39 | 39 | 39 | 39 |
| | Groove | Formed | Formed | Not formed | Formed | Formed | Not formed | Formed, narrow | Formed |
| | Depth C' of groove (mm) | 31.5 | 31.5 | - | 31.5 | 31.5 | - | 31.5 | 31.5 |
| | Width D' of groove (mm) | 12.5 | 12.5 | - | 12.5 | 12.5 | - | 3.7 | 12.5 |
| | D'/B'*100 | 32 | 32 | - | 32 | 32 | - | 9 | 32 |
| Shape of bumper absorber | Comparison between dimensions A and A' | A>A' | A>A' | A>A' | A>A' | A>A' | A>A' | A>A' | A>A' |
| | Dimension E (mm) | 10 | 10 | 10 | 10 | 10 | 10 | 10 | 0 |
| | E/A*100 (%) | 11 | 11 | 11 | 11 | 11 | 11 | 11 | 0 |
| | | 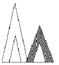 | 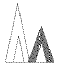 | 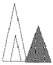 | 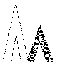 | 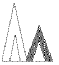 | 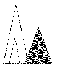 | 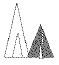 | 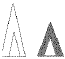 |
| Evaluation item 1 (repulsion peak) | | Good | Good | Good | Good | Good | Good | Good | Good |
| Evaluation item 2 (repulsion peak / repulsive force at a time of separation) | | Good | Good | Good | Good | Good | Good | Good | Good |
| Evaluation item 3 (maximum stroke of bumper absorber) | | Good | Good | Good | Good | Good | Good | Good | Good |
| Maximum stroke of bumper absorber (mm) | | 58 | 65 | 63 | 56 | 54 | 59 | 61 | 59 |
| Evaluation item 4 (energy absorption amount efficiency) | | Good | Good | Good | Good | Good | Good | Good | Good |
| Total energy absorption amount/weight of bumper absorber | | 2.0 | 2.4 | 2.2 | 1.8 | 1.6 | 1.9 | 1.9 | 2.0 |
| Weight of bumper absorber | | 111 | 91 | 98 | 121 | 136 | 115 | 114 | 111 |

| | | Comparative Example | | | | | | | |
|---|---|---|---|---|---|---|---|---|---|
| | | 1 | 2 | 3 | 4 | 5 | 6 | 7 | 8 |
| First structure | Density (kg/m³) | 180 | 180 | 70 | 180 | 180 | 180 | 70 | 180 |
| | Dimension A (mm) | 90 | 90 | 90 | 90 | 90 | 90 | 90 | 90 |
| | Dimension B (mm) | 78 | 39 | 39 | 39 | 39 | 39 | 39 | 39 |
| | Groove | Not formed | Formed | Formed | Not formed | Formed | Not formed | Formed | Formed |
| | Depth C of groove (mm) | - | 31.5 | 31.5 | - | 31.5 | 0 | 31.5 | 31.5 |
| | Width D of groove (mm) | - | 12.5 | 12.5 | - | 3.7 | - | 12.5 | 12.5 |
| | D/B*100 | - | 32 | 32 | - | 9 | - | 32 | 32 |
| Second structure | Density (kg/m³) | N/A | 70 | 70 | 70 | 70 | 180 | 180 | 180 |
| | Dimension A' (mm) | - | 90 | 90 | 67.5 | 67.5 | 90 | 67.5 | 67.5 |
| | Dimension B' (mm) | - | 39 | 39 | 39 | 39 | 39 | 39 | 39 |
| | Groove | N/A | Formed | Formed | Formed | Formed | Not formed | Formed | Formed |
| | Depth C' of groove (mm) | - | 31.5 | 31.5 | 31.5 | 31.5 | - | 31.5 | 31.5 |
| | Width D' of groove (mm) | - | 12.5 | 12.5 | 12.5 | 12.5 | - | 12.5 | 12.5 |
| | D'/B'*100 | - | 32 | 32 | 32 | 32 | - | 32 | 32 |
| Shape of bumper absorber | Comparison between dimensions A and A' | N/A | A=A' | A=A: | A>A' | A>A' | A=A' | A>A' | A>A' |
| | Dimension E (mm) | N/A | 10 | 10 | 10 | 10 | 10 | 10 | 10 |
| | E/A*100 (%) | - | 11 | 11 | 11 | 11 | 11 | 11 | 11 |
| | | 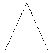 | 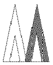 | 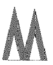 | 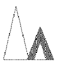 | 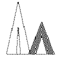 | 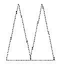 | 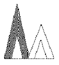 | 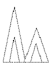 |
| Evaluation item 1 (repulsion peak) | | Poor | Poor | Poor | Poor | Poor | Poor | Poor | Good |
| Evaluation item 2 (repulsion peak / repulsive force at a time of separation) | | Poor | Poor | Poor | Poor | Poor | Poor | Poor | Good |
| Evaluation item 3 (maximum stroke of bumper absorber) | | Poor | Good | Poor | Good | Good | Poor | Good | Good |
| Maximum stroke of bumper absorber (mm) | | 35 | 52 | 80 | 48 | 57 | 40 | 65 | 50 |
| Evaluation item 4 (energy absorption amount efficiency) | | Poor | Good | Good | Good | Good | Poor | Good | Poor |
| Total energy absorption amount/weight of bumper absorber | | 0.9 | 1.5 | 3.3 | 1.8 | 1.8 | 1.1 | 2.2 | 1.4 |
| Weight of bumper absorber | | 253 | 146 | 65 | 123 | 119 | 196 | 99 | 151 |

### Reference Signs List

10 Bumper system
20 Bumper absorber
21 First structure
21a Front end surface
21b Rear end surface
21c Groove (first groove)
21f Upper surface
21g Lower surface
22 Second structure
22a Front end surface
22b Rear end surface
22c Groove (second groove)
22f Upper surface
22g Lower surface
23 Connection part
E Collision object

## Claims

1. A bumper absorber which is provided to a bumper system in a vehicle body, comprising:
a first structure whose cross-sectional structure perpendicular to a vehicle width direction of the vehicle body has a mountain shape; and
a second structure which has a shape such that the second structure is simply compressed in a front-to-rear direction of the vehicle body, wherein
the first structure is disposed such that a top of the mountain shape faces a front side of the vehicle body,
the first structure has, in a rear end surface thereof, a first groove extending in the vehicle width direction,
a dimension of the first structure in the front-to-rear direction is greater than a dimension of the second structure in the front-to-rear direction,
a density of the first structure is higher than a density of the second structure and the density of the second structure is not less than 15 kg/m³,
in an up-and-down direction of the vehicle body, a width of the first groove on the rear end surface of the first structure is 10% to 80% of a dimension of the rear end surface, and
in the front-to-rear direction of the vehicle body, a depth of the first groove is 20% to 90% of the dimension of the first structure in the front-to-rear direction.

2. The bumper absorber as set forth in claim 1, wherein in a case where a value obtained by dividing, by a weight of the bumper absorber, a total energy absorption amount of the bumper absorber against an impact of a collision object is defined as an energy absorption efficiency, the energy absorption efficiency is not less than 1.5.

3. The bumper absorber as set forth in claim 1 or 2, wherein the bumper absorber is a molded product of an expanded thermoplastic resin.

4. The bumper absorber as set forth in any one of claims 1 through 3, wherein a density ratio of the first structure to the second structure is 1.5 times to 10 times.

5. The bumper absorber as set forth in any one of claims 1 through 4, wherein the dimension of the first structure in the front-to-rear direction is not more than 150 mm.

6. The bumper absorber as set forth in any one of claims 1 through 5, wherein
a rear end part of the first structure and a rear end part of the second structure are connected to each other in the up-and-down direction with a connection part therebetween, and
in the up-and-down direction of the vehicle body, a total of the dimension of the rear end surface of the first structure, a dimension of a rear end surface of the second structure, and a dimension of the connection part is not more than 300 mm.

7. The bumper absorber as set forth in any one of claims 1 through 6, wherein a maximum stroke of the bumper absorber against collision with a collision object is 50% to 90% of the dimension of the first structure in the front-to-rear direction.

8. The bumper absorber as set forth in any one of claims 1 through 7, wherein
a rear end part of the first structure and a rear end part of the second structure are connected to each other in the up-and-down direction with a connection part therebetween, and
in the front-to-rear direction of the vehicle body, a dimension of the connection part is not more than 30% of the dimension of the first structure.

9. The bumper absorber as set forth in any one of claims 1 through 8, wherein
the second structure has, in a rear end surface thereof, a second groove extending in the vehicle width direction, and
in the front-to-rear direction of the vehicle body, a depth of the second groove is not more than 80% of the dimension of the second structure in the front-to-rear direction.

10. The bumper absorber as set forth in any one of claims 1 through 9, wherein the bumper absorber reaches a repulsion peak within 10 milliseconds after the bumper absorber collides with a collision object.

11. The bumper absorber as set forth in any one of claims 1 through 10, wherein the bumper absorber satisfies 60% < repulsion peak/repulsive force at a time of separation 100 < 120%.

12. The bumper absorber as set forth in any one of claims 1 through 11, wherein the density of the first structure is 20 kg/m³ to 333 kg/m³.

13. The bumper absorber as set forth in any one of claims 1 through 12, wherein the second structure is compressed in the front-to-rear direction of the vehicle body in response to collision with a collision object without any change in orientation of a front end surface thereof and of a rear end surface thereof.

14. The bumper absorber as set forth in any one of claims 1 through 13, wherein a cross-sectional shape of the first structure which cross-sectional shape is perpendicular to the vehicle width direction of the vehicle body is a horizontally oriented U shape such that the first structure has two leg parts.

15. The bumper absorber as set forth in any one of claims 1 through 14, wherein a cross-sectional shape of the second structure which cross-sectional shape is perpendicular to the vehicle width direction of the vehicle body is a horizontally oriented U shape such that the second structure has two leg parts.
